# EUROPÄISCHE PATENTANMELDUNG

(11) **EP 4 079 427 A1**
(43) Veröffentlichungstag der Anmeldung: **26.10.2022**
(21) Anmeldenummer: 21169886.5
(22) Anmeldetag: 22.04.2021
(51) Int. Cl.: B22F 3/00, B22F 10/10, G05B 19/418, B22F 3/03, B30B 11/00

(54) **VERFAHREN ZUR BESTIMMUNG EINES PARAMETERS EINES WERKSTOFFES UND PRESSWERKZEUG ZUR HERSTELLUNG EINES GRÜNLINGS**

(71) Anmelder: GKN Sinter Metals Engineering GmbH, 42477 Radevormwald (DE)
(72) Erfinder: Villgrattner, Thomas, 39042 Brixen (IT); Oberleiter, Roland, 39030 Uttenheim/Gais (IT)
(74) Vertreter: karo IP

(57) **Zusammenfassung**

Presswerkzeug (3) zur Herstellung mindestens eines Grünlings (2), wobei das Presswerkzeug (3) zumindest eine ebene Oberfläche (5) aufweist, die zumindest teilweise durch eine Matrize (6) gebildet ist, die sich ausgehend von der Oberfläche (5) entlang einer axialen Richtung (7) erstreckt und an der Oberfläche (5) eine sich von der Oberfläche (5) entlang der axialen Richtung (7) erstreckende Kavität (11) mit einer Innenumfangsfläche (12) aufweist; wobei die Kavität (11) eine Aufnahme (13) für einen pulverförmigen Werkstoff (1) ausbildet, der in der Kavität (11) durch zumindest einen in die Kavität (11) entlang der axialen Richtung (7) eintauchenden Stempel (8) zu dem Grünling (2) verpressbar ist.

## Beschreibung

Die Erfindung betrifft ein Verfahren zur Bestimmung mindestens eines Parameters eines Werkstoffes mit einem zur Herstellung eines Grünlings verwendbaren Presswerkzeug. Die Erfindung betrifft auch ein Presswerkzeug zur Herstellung mindestens eines Grünlings.

Ein Presswerkzeug weist insbesondere eine ebene Oberfläche auf, die zumindest teilweise durch eine Matrize gebildet ist, die sich ausgehend von der Oberfläche entlang einer axialen Richtung erstreckt und an der Oberfläche eine sich von der Oberfläche entlang der axialen Richtung erstreckende Kavität mit einer Innenumfangsfläche aufweist. Die Kavität bildet eine Aufnahme für einen pulverförmigen Werkstoff aus, der in der Kavität durch zumindest einen in die Kavität entlang der axialen Richtung eintauchenden Stempel zu dem Grünling verpressbar ist. Ein Presswerkzeug kann auch mehrerer Stempel aufweisen, die entlang der axialen Richtung bewegt werden und von einer Seite oder von gegenüberliegenden Seiten in die Matrize eintauchen.

Mit einem Presswerkzeug werden insbesondere sinterfähige Grünlinge bzw. beliebig weiter zu verarbeitende (z. B. durch eine Wärmebehandlung) Grünlinge hergestellt, also Grünlinge, die nach dem Pressvorgang z. B. gesintert werden können. Insbesondere können in der Matrize metallische und/oder keramische Pulver zu Grünlingen verpresst werden. Insbesondere kann das Verfahren zum Betrieb des Presswerkzeugs und zur Herstellung des Grünlings eingesetzt werden. Insbesondere kann das Presswerkzeug zur Herstellung des Grünlings eingesetzt werden.

Mit einem Presswerkzeug kann aus dem pulverförmigen Werkstoff in einem ersten Schritt mittels Krafteinwirkung (über den mindestens einen Stempel) und einer Negativform (gebildet durch die Innenumfangsfläche der Matrize und den mindestens einen Stempel) ein Grünling gebildet werden. Aus diesem Grünling kann in weiteren Prozessschritten ein Endprodukt generiert werden.

Der pulverförmige Werkstoff, insbesondere dessen Parameter bzw. Eigenschaften Fülldichte und Durchflussrate, haben einen erheblichen Einfluss auf die Qualität der produzierten Grünlinge. Diese Parameter ändern sich, unter anderem, in Abhängigkeit von der Standzeit (Alterung und Zusammensacken) des Werkstoffs, der Temperatur des Werkstoffs, dem Füllgrad eines Vorratsbehälters zur Bevorratung des Werkstoffs, usw.

Diese beiden Parameter werden bisher z. B. mittels eines so genannten Hall Flowmeter (Hall-Flussmesser), meist manuell, gemessen. Aufgrund des Aufwandes werden Messungen der Fülldichte und Durchflussrate in einer Serienproduktion von Grünlingen (z. B. umfassend die Herstellung von mindestens 500 Grünlinge unmittelbar nacheinander, d. h. ohne die zwischenzeitliche Fertigung anderer Grünlinge mit diesem Presswerkzeug) nicht durchgeführt, sondern nur die Werte aus dem Datenblatt des Pulvers "nur einmalig" übernommen. Im Idealfall sind die wesentlichen Eigenschaften wie Fülldichte und Durchflussrate des Werkstoffes konstant und damit zu jedem Zeitpunkt während der Produktion bekannt. Somit kann die genutzte Formpresse (das Presswerkzeug) entsprechend justiert und eine hohe Qualität der produzierten Grünlinge eingestellt werden. Schwankungen der Eigenschaften werden indirekt über Qualitätsschwankungen der Grünlinge bestimmt, so dass nur mit einer gewissen Prozesshysterese gegengesteuert werden kann.

Eine Messeinrichtung zur Bestimmung eines Parameters eines Werkstoffes ist z. B. ein Hall-Flussmesser. Ein solcher Hall-Flussmesser dient der Bestimmung einer Dichte sowie einer Hall-Durchflussrate eines pulverförmigen Werkstoffes. Das Hall-Flussmesser umfasst einen Trichter mit einer Austrittsöffnung. Über den genormten Trichter und die genormte Austrittsöffnung kann eine Zeit bestimmt werden, in der ein vorbestimmtes Volumen eines pulverförmigen Werkstoffes über die Austrittsöffnung aus dem Trichter ausströmt (siehe auch DIN EN ISO 3923; DIN EN ISO 4490; DIN EN ISO 14629; ASTM B212; ASTM B213; ASTM B417).

Hiervon ausgehend ist es Aufgabe der vorliegenden Erfindung, die mit Bezug auf den Stand der Technik geschilderten Probleme zumindest teilweise zu lösen. Insbesondere soll ein Verfahren zur Bestimmung eines Parameters eines Werkstoffes vorgeschlagen werden, durch das auch während einer Serienherstellung einer Vielzahl von Grünlingen die Parameter ermittelt werden können. Weiterhin soll ein dafür geeignet ausgeführtes Presswerkzeug vorgeschlagen werden.

Zur Lösung dieser Aufgabe wird ein Verfahren gemäß den Merkmalen des Patentanspruchs 1 sowie ein Presswerkzeug gemäß den Merkmalen des Patentanspruchs 7 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Bestimmung mindestens eines Parameters eines Werkstoffes mit einem zur Herstellung eines Grünlings verwendbaren Presswerkzeug vorgeschlagen. Das Presswerkzeug weist zumindest
- eine Arbeitsebene mit zumindest einer ebenen Oberfläche,
- eine die Oberfläche zumindest teilweise ausbildende Matrize,
- einen relativ zur der Oberfläche entlang einer axialen Richtung bewegbaren Stempel,
- einen Füllschuh zur Bereitstellung eines pulverförmigen Werkstoffes sowie
- eine Messeinrichtung zur Bestimmung des Parameters des zur Herstellung des Grünlings verwendeten Werkstoffes
auf. Die Matrize erstreckt sich ausgehend von der Oberfläche entlang der axialen Richtung und weist an der Oberfläche eine sich von der Oberfläche entlang der axialen Richtung erstreckende Kavität mit einer Innenumfangsfläche auf. Die Kavität bildet eine Aufnahme für den pulverförmigen Werkstoff aus, der in der Kavität durch zumindest den in die Kavität entlang der axialen Richtung eintauchenden Stempel zu dem Grünling verpressbar ist. Der Füllschuh ist entlang der Oberfläche bewegbar. Das Presswerkzeug weist an der Oberfläche und entlang einer radialen Richtung neben der Kavität eine Öffnung auf, an der die Messeinrichtung angeordnet ist. Die Messeinrichtung weist ein sich an die Oberfläche und die Öffnung unmittelbar anschließendes, konstantes Volumen mit einer verschließbaren Austrittsöffnung auf. Das Verfahren umfasst zumindest die folgenden Schritte:
a) Befüllen des Füllschuhs mit dem Werkstoff, z. B. aus einem Vorratsbehälter;
b) Bewegen des Füllschuhs über die Oberfläche und über die Öffnung;
c) zumindest teilweises Befüllen des Volumens mit dem Werkstoff aus dem Füllschuh über die Öffnung;
d) Durchführung der Bestimmung des mindestens einen Parameters durch die Messeinrichtung und Entfernen des Werkstoffes aus dem Volumen über die Austrittsöffnung.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte z. B. während des Betriebes des Presswerkzeugs kann variieren. Ebenso ist möglich, dass Verfahrensschritte einander zumindest teilweise zeitlich überlagern. Ganz besonders bevorzugt finden die Verfahrensschritte a) und b) und/ oder b) und c) zumindest teilweise gleichzeitig statt. Schritt d) kann bedingt sein und ggf. nur dann ausgeführt werden, wenn nach einem mehrmaligen Durchführen zumindest von Schritt c) (ggf. auch Schritt b), möglicherweise zusätzlich auch Schritt a)) das Volumen vollständig gefüllt ist. Schritt a) kann mit einer geringeren Häufigkeit als die Schritte b) und c), ggf. mit einer geringeren, größeren oder gleichen Häufigkeit wie Schritt d) durchgeführt werden. Insbesondere werden die Schritte a) bis d) in der angeführten Reihenfolge durchgeführt, wobei insbesondere mehrmalige Wiederholungen einzelner Schritte oder das zwischenzeitliche Durchführen weiterer Verfahrensschritte möglich ist. Insbesondere wird Schritt d) nur dann durchgeführt, wenn das Volumen vollständig mit dem Werkstoff befüllt ist. Insbesondere wird Schritt a) nur dann durchgeführt, wenn die aktuelle Füllmenge des Füllschuhs nicht zur Herstellung mindestens bzw. genau eines Grünlings ausreicht.

Das Presswerkzeug ist insbesondere zur Herstellung sinterfähiger Grünlinge bzw. beliebig weiter zu verarbeitender (z. B. durch eine Wärmebehandlung) Grünlinge geeignet ausgeführt. Insbesondere können in der Matrize metallische und/oder keramische Pulver zu Grünlingen verpresst werden. Insbesondere kann das Verfahren zum Betrieb des Presswerkzeugs und zur Herstellung des Grünlings eingesetzt werden. Insbesondere kann das Presswerkzeug zur Herstellung des Grünlings eingesetzt werden.

Mit dem Presswerkzeug kann aus dem pulverförmigen Werkstoff mittels Krafteinwirkung (über den mindestens einen Stempel) und einer Negativform (gebildet durch die Innenumfangsfläche der Matrize und den mindestens einen Stempel) ein Grünling gebildet werden. Aus diesem Grünling kann in weiteren Prozessschritten ein Endprodukt generiert werden. Es kann ein Stempel oder es können eine Mehrzahl von Stempeln vorgesehen sein. Die Stempel können von einer Seite oder voneinander gegenüberliegenden Seiten in die Matrize eintauchen.

Ein Füllschuh ist grundsätzlich bekannt. Er dient der Aufnahme des pulverförmigen Werkstoffes, der durch den Füllschuh hin zur Kavität befördert wird. Dabei bewegt sich der Füllschuh parallel zur Oberfläche, insbesondere entlang der Oberfläche. Der Füllschuh kann hin zur Oberfläche offen ausgeführt sein, so dass der Werkstoff, sobald der Füllschuh zumindest teilweise über der Kavität angeordnet ist, aus dem Füllschuh in die durch die Kavität gebildete Aufnahme austreten kann. In dem Füllschuh kann genau die für den einen Grünling vorbestimmte Menge an Werkstoff vorgesehen sein. Alternativ kann das genaue Volumen des Werkstoffes durch die Aufnahme selbst definiert sein, d. h. die Aufnahme wird durch den Werkstoff vollständig gefüllt und der Füllschuh wirkt als Abstreifer. In diesem Fall kann in dem Füllschuh auch eine größere Menge an Werkstoff vorgehalten werden.

Nach dem Füllen der Aufnahme wird der Füllschuh aus dem Arbeitsbereich zumindest des mindestens einen Stempels wegbewegt und der Stempel wird zum Verpressen des Werkstoffes und zur Ausbildung des Grünlings verfahren. Der Grünling wird aus der Matrize ausgestoßen und einer ggf. erforderlichen Weiterverarbeitung zugeführt. Der Füllschuh wird nach jedem Pressvorgang zum Auffüllen der Aufnahme hin zur Kavität bewegt.

Die Messeinrichtung ist an dem Presswerkzeug angeordnet, so dass insbesondere vor, nach oder während des Verpressens eines Grünlings der dafür verwendete Werkstoff in der Messeinrichtung überprüft werden kann. Dabei wird insbesondere ein in dem Füllschuh vorliegendes Teilvolumen des Werkstoffes in das Volumen der Messeinrichtung überführt.

Insbesondere wird der Füllschuh in Schritt a) in einer Ausgangsposition befüllt, in Schritt b) aus der Ausgangsposition bis hin zur Öffnung bewegt und nach Schritt c) in einem Schritt i) zurück in die Ausgangsposition bewegt.

Insbesondere wird der Füllschuh vor Schritt b), unmittelbar nach Schritt b) oder unmittelbar nach Schritt c) in einem Schritt ii) hin zur Kavität bewegt und die Aufnahme aus dem Füllschuh befüllt. Insbesondere taucht der mindestens eine Stempel zum Verpressen des Werkstoffes und zur Herstellung des Grünlings nach Schritt ii) in einem Schritt iii) in die Kavität ein.

Insbesondere wird während einer Herstellung einer Vielzahl von Grünlingen, also z. B. von mindestens 100, bevorzugt mindestens 500, besonders bevorzugt mindestens 1.000, der Schritt ii) mit einer größeren Häufigkeit als der Schritt c) durchgeführt. Insbesondere werden also mehrere Grünlinge hergestellt, bevor erneut das Volumen der Messeinrichtung befüllt wird.

Insbesondere wird das Volumen in Schritt c) vollständig befüllt.

Die Öffnung kann entlang eines vorbestimmten Verfahrwegs des Füllschuhs in der Arbeitsebene des Presswerkzeugs angeordnet sein. Insbesondere kann die Öffnung entlang des Verfahrwegs zwischen der Ausgangsposition und der Kavität angeordnet sein, so dass der Füllschuh bei jedem Befüllen der Aufnahme die Öffnung überfährt. Insbesondere kann die Ausgangsposition aber auch zwischen der Kavität und der Öffnung angeordnet sein, so dass der Füllschuh in einer gesonderten Bewegung hin zur Öffnung bewegt werden muss.

Die Messung des mindestens einen Parameters, insbesondere der Fülldichte und/ oder der Durchflussrate, wird insbesondere bei jedem Bauteil bzw. Grünling durchgeführt. Die Messung kann aber auch nur für eine vorbestimmbare Menge an Grünlingen und insbesondere in einer frei bestimmbaren Verteilung durchgeführt werden.

Insbesondere ist an der Öffnung ein Deckel, z. B. ein parallel zur Arbeitsebene verlagerbarer Schieber vorgesehen, so dass das Volumen der Messeinrichtung nur für eine Teilmenge der produzierten Grünlinge freigegeben und eine Messung des Parameters ermöglicht wird.

Dieser Deckel ist insbesondere dann nicht erforderlich, wenn der Füllschuh nur im Rahmen einer gesonderten Bewegung hin zur Öffnung bewegt wird.

Insbesondere wird das Volumen der Messeinrichtung bei jedem Grünling oder immer nach Verpressen einer Mehrzahl von Grünlingen jeweils teilweise gefüllt. Dadurch kann insbesondere ein Mittelwert des mindestens einen Parameters gebildet werden, z. B. über mehrere Befüllungen des Füllschuhs oder über mehrere Pulverchargen hinweg.

Insbesondere kann der mindestens eine Parameter nur in Abständen ermittelt werden, wobei also zwischen den Messungen eine Mehrzahl bzw. unterschiedliche Anzahlen von Grünlingen produziert werden. In Abhängigkeit von einer Abweichung der ermittelten Werte für den mindestens einen Parameter können die Mess-Intervalle dynamisch angepasst werden.

Die Mess-Intervalle werden insbesondere in Abhängigkeit eines Füllstandes des Werkstoffes im Vorratsbehälters angepasst. Vor allem kurz vor und nach einem Wechsel bzw. Nachfüllen des Werkstoffes im Vorratsbehälter können die Mess-Intervalle verkürzt werden.

Der Füllstand des Werkstoffes im Vorratsbehälter kann z. B. mittels Lasertriangulation, Gewicht, Druck, etc. oder aus der Multiplikation eines bekannten Teilegewichts eines Grünlings mit der produzierten Stückzahl berechnet werden.

Bei einem längeren Ruhestand des Presswerkzeugs, wenn also keine Grünlinge für einen längeren Zeitraum produziert werden, kann der Werkstoff im Füllschuh und/ oder im Vorratsbehälter seine Eigenschaften verändern. Aus diesem Grund können die Mess-Intervalle bei einem Neustart des Presswerkzeugs reduziert werden bzw. es können zu Beginn einer erneuten Produktion von Grünlingen Messungen für alle Grünlinge durchgeführt werden.

Der mindestens eine Parameter kann aber unabhängig von der Produktion von Grünlingen ermittelt werden. In diesem Fall werden insbesondere keine Grünlinge produziert, sondern der Füllschuh wird nur dazu genutzt, um die Messeinrichtung zu füllen. Alternativ kann die Messeinrichtung auch von Hand gefüllt werden.

Die Messeinrichtung dient insbesondere der Bestimmung eines Parameters eines Werkstoffes. Die Messeinrichtung ist insbesondere nach Art eines Hall-Flussmessers ausgeführt. Ein solcher Hall-Flussmesser dient der Bestimmung einer Dichte sowie einer Hall-Durchflussrate eines pulverförmigen Werkstoffes. Ein Hall-Flussmesser umfasst einen Trichter mit dem Volumen und mit einer Austrittsöffnung. Über den genormten Trichter und die genormte Austrittsöffnung kann eine Zeit bestimmt werden, in der ein vorbestimmtes Volumen eines pulverförmigen Werkstoffes über die Austrittsöffnung aus dem Trichter ausströmt.

Über die Messeinrichtung kann insbesondere eine Fülldichte und die Durchflussrate während der Produktion von Grünlingen kontinuierlich und automatisiert gemessen werden. Die Messeinrichtung, bevorzugt ein Hall-Flussmeter, kann sehr nah an der Matrize des Presswerkzeugs, insbesondere unterhalb der Deckplatte (also der Arbeitsebene), montiert werden. Dadurch kann ein Standard-Füllschuh genutzt werden, um das Volumen der Messeinrichtung zu füllen. Der Ausfluss des Werkstoffes aus dem Volumen erfolgt über eine, z. B. durch einen Schieber oder eine Klappe, verschließbare Austrittsöffnung. Somit ist das Volumen des zu vermessenden Werkstoffes durch die Messeinrichtung konstruktiv vorgegeben.

Das Hall-Flussmeter (samt nötigen Zubehör) kann insbesondere auf einer Waage, z. B. einem Biegebalken mit Dehnungsmessstreifen, montiert werden. Dadurch kann die Masse des in dem Volumen angeordneten Werkstoffes gemessen werden. Aus dem Quotienten von (gemessener) Masse und (bekanntem) Volumen kann die Fülldichte berechnet werden.

Durch Öffnen der Austrittsöffnung wird das Hall-Flussmeter bzw. dessen Volumen entleert. Die Zeit, die der Werkstoff zum Ausfließen aus dem Volumen benötigt, kann z. B. mittels einer Lichtschranke, die eine Stoppuhr triggert, bestimmt werden. Zur Bestimmung der Durchflussrate wird die gemessene Zeit und die gemessene Masse mittels Dreisatzes auf eine normierte Massenprobe von 50 Gramm umgerechnet.

Insbesondere umfasst das Presswerkzeug eine Steuereinrichtung, durch die eine Reihenfolge und Häufigkeit zumindest der Schritte a), b), c) und d) in Abhängigkeit von zumindest folgenden Randbedingungen festgelegt wird:
- einem Wert des mindestens einen bestimmten Parameters;
- einer Vorgabe für die Bestimmung (z. B. vorbestimmte Messhäufigkeit, vorbestimmte Verteilung der Messungen über eine Produktionsmenge hinweg);
- einem Füllstand des Werkstoffes im Vorratsbehälter bzw. eines Nachfüllvorgangs des Vorratsbehälters;
- einem Zeitintervall, in dem der Werkstoff im Vorratsbehälter oder im Füllschuh bevorratet ist.

Es wird weiter ein Presswerkzeug zur Herstellung mindestens eines Grünlings vorgeschlagen. Das Presswerkzeug weist zumindest eine ebene Oberfläche auf, die zumindest teilweise durch eine Matrize gebildet ist, die sich ausgehend von der Oberfläche entlang einer axialen Richtung erstreckt und an der Oberfläche eine sich von der Oberfläche entlang der axialen Richtung erstreckende Kavität mit einer Innenumfangsfläche aufweist. Die Kavität bildet eine Aufnahme für einen pulverförmigen Werkstoff aus, der in der Kavität durch zumindest einen in die Kavität entlang der axialen Richtung eintauchenden Stempel zu dem Grünling verpressbar ist. Das Presswerkzeug weist an der Oberfläche und entlang einer radialen Richtung neben der Kavität eine Öffnung auf, an der eine Messeinrichtung zur Bestimmung eines Parameters des zur Herstellung des Grünlings verwendeten Werkstoffes angeordnet ist.

Die radiale Richtung verläuft insbesondere quer zur axialen Richtung.

Insbesondere ist der Parameter zumindest eine Flussrate oder eine Dichte des Werkstoffes.

Insbesondere weist die Messeinrichtung ein sich an die Oberfläche und die Öffnung unmittelbar anschließendes, konstantes Volumen mit einer verschließbaren Austrittsöffnung auf, so dass der Werkstoff über die Öffnung in das Volumen einfüllbar und aus dem Volumen über die Austrittsöffnung ausführbar ist. Die Messeinrichtung weist zumindest einen ersten Sensor oder einen zweiten Sensor auf. Der erste Sensor dient zur Erfassung der Flussrate, der das Austreten des Werkstoffes über die Austrittsöffnung erfasst. Z. B. kann der erste Sensor eine Lichtschranke umfassen, durch die eine Zeit bestimmbar ist, in der das Volumen entleerbar ist. Der zweite Sensor dient der Erfassung des Gewichts des in dem Volumen befindlichen Werkstoffes, so dass daraus die Dichte bestimmbar ist. Z. B. kann der zweite Sensor ein Dehnungsmessstreifen umfassen.

Insbesondere ist die Öffnung durch einen Deckel verschließbar.

Insbesondere umfasst das Presswerkzeug zusätzlich einen Füllschuh zur Bereitstellung des pulverförmigen Werkstoffes, wobei der Füllschuh entlang der Oberfläche bewegbar ist; wobei der Füllschuh zum Befüllen der Kavität über die Kavität und zur Befüllung der Messeinrichtung über die Öffnung verfahrbar ist.

Insbesondere weist der Füllschuh eine Ausgangsposition auf, in der der Füllschuh aus einem Vorratsbehälter für den Werkstoff befüllbar ist, wobei die Öffnung zwischen der Ausgangsposition und der Kavität oder die Ausgangsposition zwischen der Kavität und der Öffnung angeordnet ist.

Insbesondere umfasst das Presswerkzeug zusätzlich den relativ zur der Oberfläche entlang der axialen Richtung bewegbaren Stempel, einen Füllschuh zur Bereitstellung des pulverförmigen Werkstoffes sowie eine Steuereinrichtung, die zur Durchführung des beschriebenen Verfahrens eingerichtet ist.

Es wird insbesondere eine Steuereinrichtung vorgeschlagen, die zur Durchführung des Verfahrens ausgestattet, konfiguriert oder programmiert ist.

Weiter kann das Verfahren auch von einem Computer bzw. mit einem Prozessor einer Steuereinheit bzw. der Steuereinrichtung ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf das Presswerkzeug, die Steuereinrichtung und/oder das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Presswerkzeug in einer Seitenansicht im Schnitt; und
- Fig. 2:: einen Ausschnitt der Arbeitsebene in einer Seitenansicht im Schnitt.

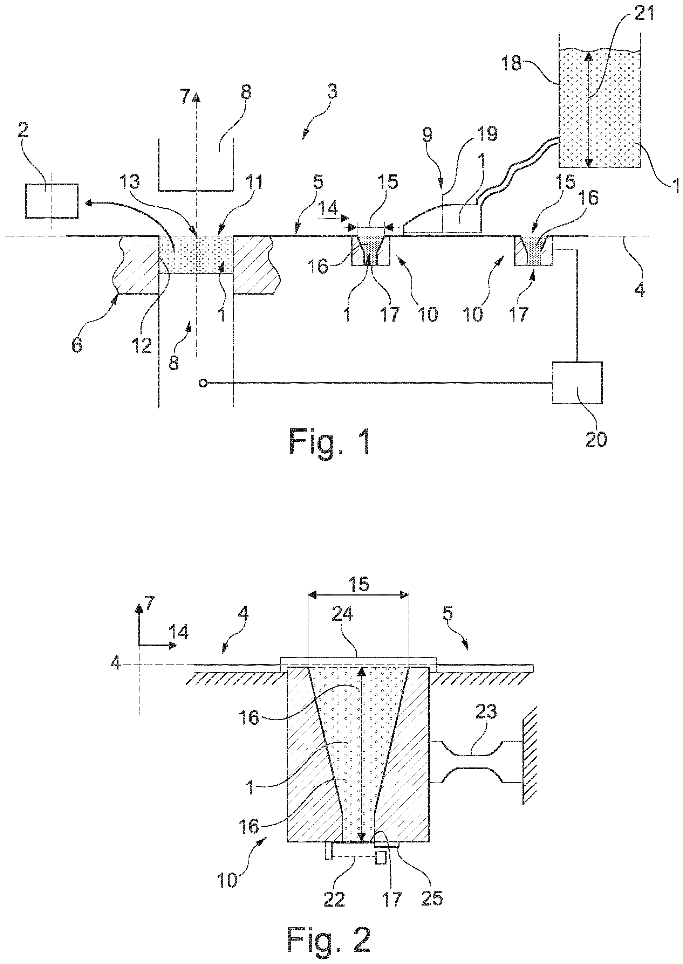

Fig. 1 zeigt ein Presswerkzeug 3 in einer Seitenansicht im Schnitt. Fig. 2 zeigt einen Ausschnitt der Arbeitsebene 4 bzw. des Presswerkzeugs 3 in einer Seitenansicht im Schnitt. Die Fig. 1 und 2 werden im Folgenden gemeinsam beschrieben.

Das Presswerkzeug 3 umfasst die relativ zur der Oberfläche 5 entlang der axialen Richtung 7 bewegbaren Stempel 8, einen Füllschuh 9 zur Bereitstellung des pulverförmigen Werkstoffes 1 sowie eine Steuereinrichtung 20, die zur Durchführung des beschriebenen Verfahrens eingerichtet ist.

Das Presswerkzeug 3 weist eine ebene Oberfläche 5 auf, die teilweise durch eine Matrize 6 gebildet ist, die sich ausgehend von der Oberfläche 5 entlang einer axialen Richtung 7 erstreckt und an der Oberfläche 5 eine sich von der Oberfläche entlang der axialen Richtung 7 erstreckende Kavität 11 mit einer Innenumfangsfläche 12 aufweist. Die Kavität 11 bildet eine Aufnahme 13 für einen pulverförmigen Werkstoff 1 aus, der in der Kavität 11 durch zwei in die Kavität 11 entlang der axialen Richtung 7 eintauchende Stempel 8 zu dem Grünling 2 verpressbar ist. Das Presswerkzeug 3 weist an der Oberfläche 5 und entlang einer radialen Richtung 14 neben der Kavität 11 eine Öffnung 15 auf, an der eine Messeinrichtung 10 zur Bestimmung eines Parameters des zur Herstellung des Grünlings 2 verwendeten Werkstoffes 1 angeordnet ist.

Die Messeinrichtung 10 weist ein sich an die Oberfläche 5 und die Öffnung 15 unmittelbar anschließendes, konstantes Volumen 16 mit einer verschließbaren Austrittsöffnung 17 auf, so dass der Werkstoff 1 über die Öffnung 15 in das Volumen 16 einfüllbar und aus dem Volumen 16 über die Austrittsöffnung 17 ausführbar ist. Die Messeinrichtung 10 weist einen ersten Sensor 22 und einen zweiten Sensor 23 auf. Der erste Sensor 22 (z. B. Lichtquelle, Lichtstrahl, Sensor) dient zur Erfassung der Flussrate, der das Austreten des Werkstoffes 1 über die Austrittsöffnung 17 erfasst. Der zweite Sensor 23 dient der Erfassung des Gewichts des in dem Volumen 16 befindlichen Werkstoffes 1, so dass daraus die Dichte bestimmbar ist.

Die Öffnung 15 kann durch einen Deckel 24 verschließbar sein (siehe Fig. 2).

Das Presswerkzeug 3 umfasst einen Füllschuh 9 zur Bereitstellung des pulverförmigen Werkstoffes 1, wobei der Füllschuh 9 entlang der Oberfläche 5 bewegbar ist. Der Füllschuh 9 ist zum Befüllen der Kavität 11 über die Kavität 11 und zur Befüllung der Messeinrichtung 10 über die Öffnung 15 verfahrbar auf der Arbeitsebene 4 angeordnet.

Der Füllschuh 9 weist eine Ausgangsposition 19 (siehe Fig. 1) auf, in der der Füllschuh 9 aus einem Vorratsbehälter 18 für den Werkstoff 1 befüllbar ist, wobei die Öffnung 15 zwischen der Ausgangsposition 19 und der Kavität 11 (siehe Fig. 1, linke Position der Messeinrichtung 10) oder die Ausgangsposition 19 zwischen der Kavität 11 und der Öffnung 15 (siehe Fig. 1, rechte Position der Messeinrichtung 10) angeordnet ist.

Gemäß Schritt a) des Verfahrens erfolgt ein Befüllen des Füllschuhs 9 mit dem Werkstoff 1 aus dem Vorratsbehälter 18. Gemäß Schritt b) erfolgt ein Bewegen des Füllschuhs 9 über die Oberfläche 5 und über die Öffnung 15. Gemäß Schritt c) erfolgt ein zumindest teilweises Befüllen des Volumens 16 mit dem Werkstoff 1 aus dem Füllschuh 9 über die Öffnung 15. Gemäß Schritt d) erfolgt eine Durchführung der Bestimmung des mindestens einen Parameters durch die Messeinrichtung 10 und ein Entfernen des Werkstoffes 1 aus dem Volumen 16 über die Austrittsöffnung 17. Der Ausfluss des Werkstoffes 1 aus dem Volumen 16 erfolgt über eine, durch einen Schieber 25 verschließbare Austrittsöffnung 17. Somit ist das Volumen 16 des zu vermessenden Werkstoffes 1 durch die Messeinrichtung 10 konstruktiv vorgegeben.

Der Füllschuh 9 wird in Schritt a) in einer Ausgangsposition 19 befüllt, in Schritt b) aus der Ausgangsposition 19 bis hin zur Öffnung 15 bewegt und nach Schritt c) in einem Schritt i) zurück in die Ausgangsposition 19 bewegt.

Der Füllschuh 9 kann vor Schritt b), unmittelbar nach Schritt b) oder unmittelbar nach Schritt c) in einem Schritt ii) hin zur Kavität 11 bewegt und die Aufnahme 13 aus dem Füllschuh 9 befüllt werden. Die Stempel 8 tauchen zum Verpressen des Werkstoffes 1 und zur Herstellung des Grünlings 2 nach Schritt ii) in einem Schritt iii) in die Kavität 11 ein.

Der zweite Sensor 23 der Messeinrichtung 10 umfasst einen Biegebalken mit Dehnungsmessstreifen. Dadurch kann die Masse des in dem Volumen 16 angeordneten Werkstoffes 1 gemessen werden. Aus dem Quotienten von (gemessener) Masse und (bekanntem) Volumen 16 kann die Fülldichte berechnet werden.

Durch Öffnen der Austrittsöffnung 17 wird das Volumen 16 entleert. Die Zeit, die der Werkstoff 1 zum Ausfließen aus dem Volumen 16 benötigt, kann mit dem ersten Sensor 22, einer Lichtschranke, die eine Stoppuhr triggert, bestimmt werden. Zur Bestimmung der Durchflussrate wird die gemessene Zeit und die gemessene Masse mittels Dreisatzes auf eine normierte Massenprobe von 50 Gramm umgerechnet. Die Messeinrichtung 10 kann über die Steuereinrichtung betrieben werden.

### Bezugszeichenliste

1 Werkstoff
2 Grünling
3 Presswerkzeug
4 Arbeitsebene
5 Oberfläche
6 Matrize
7 axiale Richtung
8 Stempel
9 Füllschuh
10 Messeinrichtung
11 Kavität
12 Innenumfangsfläche
13 Aufnahme
14 radiale Richtung
15 Öffnung
16 Volumen
17 Austrittsöffnung
18 Vorratsbehälter
19 Ausgangsposition
20 Steuereinrichtung
21 Füllstand
22 erster Sensor
23 zweiter Sensor
24 Deckel
25 Schieber

## Patentansprüche

1. Verfahren zur Bestimmung mindestens eines Parameters eines Werkstoffes (1) mit einem zur Herstellung eines Grünlings (2) verwendbaren Presswerkzeug (3), wobei das Presswerkzeug (3) zumindest eine Arbeitsebene (4) mit zumindest einer ebenen Oberfläche (5), eine die Oberfläche (5) zumindest teilweise ausbildende Matrize (6), einen relativ zur der Oberfläche (5) entlang einer axialen Richtung (7) bewegbaren Stempel (8), einen Füllschuh (9) zur Bereitstellung eines pulverförmigen Werkstoffes (1) sowie eine Messeinrichtung (10) zur Bestimmung des Parameters des zur Herstellung des Grünlings (2) verwendeten Werkstoffes (1) aufweist; wobei sich die Matrize (6) ausgehend von der Oberfläche (5) entlang der axialen Richtung (7) erstreckt und an der Oberfläche (5) eine sich von der Oberfläche (5) entlang der axialen Richtung (7) erstreckende Kavität (11) mit einer Innenumfangsfläche (12) aufweist; wobei die Kavität (11) eine Aufnahme (13) für den pulverförmigen Werkstoff (1) ausbildet, der in der Kavität (11) durch zumindest den in die Kavität (11) entlang der axialen Richtung (7) eintauchenden Stempel (8) zu dem Grünling (2) verpressbar ist; wobei der Füllschuh (9) entlang der Oberfläche (5) bewegbar ist; wobei das Presswerkzeug (3) an der Oberfläche (5) und entlang einer radialen Richtung (14) neben der Kavität (11) eine Öffnung (15) aufweist, an der die Messeinrichtung (10) angeordnet ist, wobei die Messeinrichtung (10) ein sich an die Oberfläche (5) und die Öffnung (15) unmittelbar anschließendes, konstantes Volumen (16) mit einer verschließbaren Austrittsöffnung (17) aufweist; wobei das Verfahren zumindest die folgenden Schritte umfasst:
a) Befüllen des Füllschuhs (9) mit dem Werkstoff (1) aus einem Vorratsbehälter (18);
b) Bewegen des Füllschuhs (9) über die Oberfläche (5) und über die Öffnung (15);
c) zumindest teilweises Befüllen des Volumens (16) mit dem Werkstoff (1) aus dem Füllschuh (9) über die Öffnung (15);
d) Durchführung der Bestimmung des mindestens einen Parameters durch die Messeinrichtung (10) und Entfernen des Werkstoffes (1) aus dem Volumen (16) über die Austrittsöffnung (17).

2. Verfahren nach Patentanspruch 1, wobei der Füllschuh (9) in Schritt a) in einer Ausgangsposition (19) befüllt, in Schritt b) aus der Ausgangsposition (19) bis hin zur Öffnung (15) bewegt und nach Schritt c) in einem Schritt i) zurück in die Ausgangsposition (19) bewegt wird.

3. Verfahren nach Patentanspruch 2, wobei der Füllschuh (9) vor Schritt b), unmittelbar nach Schritt b) oder unmittelbar nach Schritt c) in einem Schritt ii) hin zur Kavität (11) bewegt und die Aufnahme (13) aus dem Füllschuh (9) befüllt wird; wobei nach Schritt ii) in einem Schritt iii) der Stempel (8) zum Verpressen des Werkstoffes (1) und zur Herstellung des Grünlings (2) in die Kavität (11) eintaucht.

4. Verfahren nach Patentanspruch 3, wobei während einer Herstellung einer Vielzahl von Grünlingen (2) der Schritt ii) mit einer größeren Häufigkeit als der Schritt c) durchgeführt wird.

5. Verfahren nach einem der vorhergehenden Patentansprüche, wobei das Volumen (16) in Schritt c) vollständig befüllt wird.

6. Verfahren nach einem der vorhergehenden Patentansprüche, wobei das Presswerkzeug (3) eine Steuereinrichtung (20) umfasst, durch die eine Reihenfolge und Häufigkeit zumindest der Schritte a), b), c) und d) in Abhängigkeit von zumindest folgenden Randbedingungen festgelegt wird:
• einem Wert des mindestens einen bestimmten Parameters;
• einer Vorgabe für die Bestimmung;
• einem Füllstand (21) des Werkstoffes (1) im Vorratsbehälter (18);
• einem Zeitintervall, in dem der Werkstoff (1) im Vorratsbehälter (18) oder im Füllschuh (9) bevorratet ist.

7. Presswerkzeug (3) zur Herstellung mindestens eines Grünlings (2), wobei das Presswerkzeug (3) zumindest eine ebene Oberfläche (5) aufweist, die zumindest teilweise durch eine Matrize (6) gebildet ist, die sich ausgehend von der Oberfläche (5) entlang einer axialen Richtung (7) erstreckt und an der Oberfläche (5) eine sich von der Oberfläche (5) entlang der axialen Richtung (7) erstreckende Kavität (11) mit einer Innenumfangsfläche (12) aufweist; wobei die Kavität (11) eine Aufnahme (13) für einen pulverförmigen Werkstoff (1) ausbildet, der in der Kavität (11) durch zumindest einen in die Kavität (11) entlang der axialen Richtung (7) eintauchenden Stempel (8) zu dem Grünling (2) verpressbar ist; wobei das Presswerkzeug (3) an der Oberfläche (5) und entlang einer radialen Richtung (14) neben der Kavität (11) eine Öffnung (15) aufweist, an der eine Messeinrichtung (10) zur Bestimmung eines Parameters des zur Herstellung des Grünlings (2) verwendeten Werkstoffes angeordnet ist.

8. Presswerkzeug (3) nach Patentanspruch 7, wobei der Parameter zumindest eine Flussrate oder eine Dichte des Werkstoffes ist.

9. Presswerkzeug (3) nach Patentanspruch 8, wobei die Messeinrichtung (10) ein sich an die Oberfläche (5) und die Öffnung (15) unmittelbar anschließendes, konstantes Volumen (16) mit einer verschließbaren Austrittsöffnung (17) aufweist, so dass der Werkstoff (1) über die Öffnung (15) in das Volumen (16) einfüllbar und aus dem Volumen (16) über die Austrittsöffnung (17) ausführbar ist; wobei die Messeinrichtung (10) zumindest einen ersten Sensor (22) zur Erfassung der Flussrate aufweist, der das Austreten des Werkstoffes (1) über die Austrittsöffnung (17) erfasst, oder einen zweiten Sensor (23) aufweist, der das Gewicht des in dem Volumen (16) befindlichen Werkstoffes (1) erfasst, so dass daraus die Dichte bestimmbar ist.

10. Presswerkzeug (3) nach Patentanspruch 9, wobei die Öffnung (15) durch einen Deckel (24) verschließbar ist.

11. Presswerkzeug (3) nach einem der vorgehenden Patentansprüche 7 bis 10, zusätzlich umfassend einen Füllschuh (9) zur Bereitstellung des pulverförmigen Werkstoffes (1), wobei der Füllschuh (9) entlang der Oberfläche (5) bewegbar ist; wobei der Füllschuh (9) zum Befüllen der Kavität (11) über die Kavität (11) und zur Befüllung der Messeinrichtung (10) über die Öffnung (5) verfahrbar ist.

12. Presswerkzeug (3) nach Patentanspruch 11, wobei der Füllschuh (9) eine Ausgangsposition (19) aufweist, in der der Füllschuh (9) aus einem Vorratsbehälter (18) für den Werkstoff (1) befüllbar ist, wobei die Öffnung (15) zwischen der Ausgangsposition (19) und der Kavität (11) oder die Ausgangsposition (19) zwischen der Kavität (11) und der Öffnung (15) angeordnet ist.

13. Presswerkzeug (3) nach einem der vorhergehenden Patentansprüche 11 und 12, zusätzlich umfassend den relativ zu der Oberfläche (5) entlang der axialen Richtung (7) bewegbaren Stempel (8), einen Füllschuh (9) zur Bereitstellung des pulverförmigen Werkstoffes (1) sowie eine Steuereinrichtung (20), die zur Durchführung eines Verfahrens nach einem der vorhergehenden Patentansprüche 1 bis 6 eingerichtet ist.
